# EUROPÄISCHE PATENTSCHRIFT

(11) **EP 2 150 451 B1**
(45) Veröffentlichungstag und Bekanntmachung des Hinweises auf die Patenterteilung: **03.08.2011**
(21) Anmeldenummer: 08759867.8
(22) Anmeldetag: 21.05.2008
(51) Int. Cl.: B62D 17/00

(54) **RADAUFHÄNGUNG MIT STURZVERSTELLUNG**
WHEEL SUSPENSION WITH CAMBER ADJUSTMENT
SUSPENSION À CARROSSAGE RÉGLABLE

(30) Priorität: 23.05.2007 DE 102007023907
(43) Veröffentlichungstag der Anmeldung: 10.02.2010
(73) Patentinhaber: Kreyer, Norbert, 56651 Niederzissen (DE)
(72) Erfinder: Kreyer, Norbert, 56651 Niederzissen (DE)
(74) Vertreter: von Kreisler Selting Werner
(86) Internationale Anmeldenummer: PCT/EP2008/056265
(87) Internationale Veröffentlichungsnummer: WO 2008/142112

(56) Entgegenhaltungen:
- EP-A1- 1 512 554
- EP-A1- 1 657 050
- EP-A1- 1 752 321
- EP-A1- 1 752 321
- EP-A1- 1 795 384
- EP-A1- 1 795 384
- EP-A1- 1 918 132
- EP-A1- 2 230 105
- EP-A2- 2 193 934
- WO-A1-2008/078612
- WO-A1-2008/078612
- DE-A1- 4 323 024
- DE-A1- 19 942 890
- DE-A1-102007 004 327
- DE-A1-102007 011 459
- DE-A1-102007 011 459
- FR-A1- 2 922 812

## Beschreibung

Die Erfindung betrifft eine Radaufhängung zur dynamischen Sturzverstellung eines lenkbaren Rades, insbesondere an der Vorderachse eines Fahrzeuges.

Es ist bekannt, dass sich das Fahrverhalten eines Fahrzeuges in Abhängigkeit der gewählten Sturzeinstellung ändert. Beispielsweise kann ein verbessertes Kurvenverhalten dadurch erzielt werden, dass ein negativer Sturz gewählt wird, d. h., dass die Räder des Fahrzeugs an ihrem oberen Ende nach innen, d. h. in Richtung des Fahrzeugs geneigt sind. Während eine negative Sturzeinstellung in einer Kurvenfahrt den Vorteil einer verbesserten Kraftubertragung und damit höhere Kurvengeschwindigkeiten ermöglicht, ist ein negativer Sturz beim Bremsen nachteilig. Das liegt daran, dass die Räder mit dem negativen Sturz weniger Auflagefläche bieten, über die die Bremskräfte übertragen werden können. Somit kann mit einer statischen Sturzverstellung die gewünschte Verbesserung der Fahreigenschaften nicht erzielt werden.

Es sind elektromechanische oder pneumatische Systeme zur dynamischen Sturzverstellung bekannt. DE 199 35 567 beschreibt beispielsweise ein System zur Änderung des Sturzes in Abhängigkeit einer Sensorik, die vielfältige Parameter des Fahrbetriebs erfasst. Dazu gehören der Lenkwinkel, die Gierbewegungen des Fahrzeugaufbaus, die Querbeschleunigung des Fahrzeugs, die Drehzahlen der Räder usw. Auf Basis dieser Parameter erfolgt eine Ansteuerung von Aktuatoren, so dass eine dynamische Sturzverstellung stattfindet.

Eine derartige Anordnung setzt durch den Einsatz von Elektronik einen komplizierten Aufbau voraus. Weiterhin wird durch den Einsatz von Elektronik in diesem Bereich eine weitere Fehlerquelle geschaffen, so dass eine optimale Funktion des Fahrwerks bei einem Defekt der Sensorik nicht sichergestellt werden kann. Zusätzliche Sensoren und Aktuatoren erhöhen weiterhin das Fahrzeuggewicht und die Kosten eines Fahrzeuges.

Zur mechanischen dynamischen Sturzverstellung ist es bekannt, die Schwenkachse eines gelenkten Rades zu neigen, so dass diese einen Winkel ungleich 90° relativ zur Fahrbahn einnimmt. Bei einem Verschwenken der Radaufhängung um die Schwenkachse findet somit eine mechanische dynamische Sturzverstellung statt. Der Winkel der Schwenkachse zur Vertikalen wird als Nachlaufwinkel bezeichnet.

Neben dem Nachlaufwinkel ist es weiterhin bekannt, im Rahmen eines Nachlaufversatzes oder eines Vorlaufversatzes die Schwenkachse gegenüber dem Radmittelpunkt zu versetzen, so dass der Radmittelpunkt nicht mehr durch die Schwenkachse verläuft.

Aufgrund der vorgewählten Einstellungen des Nachlaufwinkels sowie des Nachlaufversatzes ist der Grad der dynamischen Sturzverstellung für jede Radaufhängung konstruktionsbedingt vorherbestimmt. Eine Anpassung des Grades der dynamischen Sturzverstellung an verschiedene Fahrgegebenheiten, verschiedene Fahrzeuge oder an das Fahrverhalten des Fahrers ist nicht möglich.

Weitere Vorrichtungen zum Verstellen des Sturzwinkels eines Fahrzeugrades sind aus DE 19 942 890 A1 und DE 43 23 024 A1 bekannt. In beiden Fällen erfolgt die Änderung des Sturzes durch ein separates Betätigungsmittel.

Aufgabe der Erfindung ist es, eine Radaufhängung zur mechanischen dynamischen Sturzverstellung eines Rades zu schaffen, die ein verbessertes Fahrverhalten ermöglicht.

Die Aufgabe wird erfindungsgemäß gelöst durch die Merkmale des Anspruchs 1.

Eine Radaufhängung zur einstellbaren dynamischen Sturzverstellung eines lenkbaren Rades, insbesondere an der Vorderachse eines Fahrzeugs, weist eine Radaufnahmevorrichtung zum drehbaren Halten eines lenkbaren Rades auf. Bei der Radaufnahmevorrichtung kann es sich insbesondere um ein Radlager handeln. Die Radaufnahmevorrichtung kann neben dem Radlager auch weitere Bauteile aufweisen. Zum Verbinden der Radaufnahmevorrichtung mit einem Fahrzeugschassis weist die Radaufhängung ein oberes und ein unteres Verbindungsgelenk auf. Weiterhin ist ein Spurstangenhebel zum Verbinden der Radaufnahmevorrichtung mit einer Spurstange vorgesehen. Hierdurch erfolgt ein Übertragen von Lenkkräften dadurch, dass die Spurstange, durch eine Lenkvorrichtung angetrieben, verschoben wird.

Erfindungsgemäß ist genau eines der beiden Verbindungsgelenke mit einem Auslenkhebel verbunden. Das andere Verbindungsgelenk ist mit einem ersten Ende der Radaufnahmevorrichtung verbunden. Beispielsweise kann es sich bei dem ersten Verbindungsgelenk um das obere Verbindungsgelenk handeln, so dass das untere Verbindungsgelenk mit dem unteren Ende der Radaufnahmevorrichtung verbunden ist. Ferner ist der Auslenkhebel mit einem Aufnahmegelenk verbunden, das mit einem zweiten Ende der Radaufnahmevorrichtung verbunden ist. Dabei kann es sich insbesondere um das obere Ende der Radaufnahmevorrichtung handeln.

Das obere und das untere Verbindungsgelenk definieren eine tatsächliche oder virtuelle Schwenkachse, um die die Radaufnahmevorrichtung schwenkbar ist. Ein Schwenken der Radaufnahmevorrichtung wird dabei durch ein Verschieben der Spurstange verursacht, sodass eine dynamische mechanische Sturzverstellung erfolgt.

Vorzugsweise ist das Aufnahmegelenk in Längsrichtung des Auslenkhebels verschiebbar. Dadurch kann eine Einstellung des Grades der dynamischen Sturzverstellung erfolgen. Ein Verschieben des Aufnahmegelenks in Richtung des ersten Verbindungsgelenks kann beispielsweise eine Verringerung des Grades der dynamischen Sturzverstellung bedeuten, da die Radaufnahmeachse, die durch das Aufnahmegelenk und das zweite Verbindungsgelenk verläuft, in Richtung der tatsächlichen oder virtuellen Schwenkachse bewegt wird. Dagegen verursacht eine Verschiebung des Aufnahmegelenks in eine Richtung weg vom oberen Verbindungsgelenk vorzugsweise eine Vergrößerung des Grades der dynamischen Sturzverstellung. Dies liegt insbesondere daran, dass der Versatz der Radaufnahmevorrichtung, die insbesondere als Radlager ausgebildet sein kann, relativ zu der Schwenkachse vergrößert wird. Je größer der Versatz der Radaufnahmevorrichtung relativ zu der Schwenkachse ist, desto größer ist der Grade der dynamischen Sturzverstellung.

Bevorzugt verläuft die Schwenkachse in einem Winkel zu der Fahrbahn verläuft, der nicht 90° beträgt. Der besagte Winkel wird dabei zwischen der Fahrbahn und der Schwenkachse vorzugsweise in Längsrichtung des Fahrzeugs gemessen. Je nachdem, ob die Spur des Fahrzeugs auf Vorspur oder Nachspur eingestellt ist, kann die Richtung auch leicht gegenüber der Längsrichtung des Fahrzeugs abweichen.

Durch die beschriebene Radaufhängung kann auf einfache Weise der Grad der dynamischen Sturzverstellung eingestellt werden. Diese Einstellung kann einerseits manuell erfolgen. Ebenso ist es möglich eine Einstelleinrichtung, beispielsweise einen Stellmotor vorzusehen, durch den eine Einstellung des Grades der dynamischen Sturzverstellung auch bei einer eingebauten Radaufhängung möglich ist. Hierdurch kann die Radaufhängung schnell und individuell an Wünsche des Fahrers oder auch an weitere äußere Bedingungen, wie beispielsweise die Fahrbahngegebenheiten angepasst werden. Eine Anpassung des Grades der dynamischen Sturzverstellung kann insbesondere durch ein elektronisches Steuergerät gesteuert werden, so dass eine Vielzahl weiterer Parameter berücksichtigt werden können.

Vorzugsweise sind das obere sowie das untere Verbindungsgelenk jeweils mit einer Verbindungsvorrichtung, insbesondere mit einem oberen und einem unteren Querlenker zum Verbinden der Radaufhängung mit einem Fahrzeugschassis verbindbar. Bei einer derartigen Anordnung handelt es sich um eine Doppelquerlenkerachse.

Besonders bevorzugt verläuft zwischen dem Verbindungsgelenk, das mit dem ersten Ende der Radaufnahmevorrichtung verbunden ist und dem Aufnahmegelenk eine Radaufnahmeachse, die mit der Radaufnahmevorrichtung verbunden ist. Diese Radaufnahmeachse kann ein oberes und ein unteres Ende aufweisen, die jeweils mit dem Aufnahmegelenk und dem Verbindungsgelenk verbunden sind.

In einer bevorzugten Ausführungsform der Erfindung sind das Aufnahmegelenk sowie das obere und das untere Verbindungsgelenk als Kugelgelenke ausgebildet. Sofern nur eine Spurstange zum Übertragen der Lenkkräfte verwendet wird, ist es bevorzugt, eine Versteifungsvorrichtung vorzusehen, die mit dem Auslenkhebel zum Verhindern eines Schwenkens des Auslenkhebels um das Aufnahmegelenk verbunden ist. Das zweite Ende der Versteifungsvorrichtung kann dabei mit der Radaufnahmevorrichtung fest verbunden sein.

Das Aufnahmegelenk kann auch als Kugellager ausgebildet sein.

Weiterhin können bei Verwendung einer einzigen Spurstange der Auslenkhebel und der Spurstangenhebel zur Übertragung der Lenkkräfte als ein einziges Bauteil ausgebildet sein. Sofern zwei Spurstangen verwendet werden, können der Auslenkhebel und der Spurstangenhebel als zwei separate Bauteile ausgebildet sein. Dabei ist der Spurstangenhebel mit einer ersten Spurstange und der Auslenkhebel mit einer zweiten Spurstange verbindbar.

Vorzugsweise weist der Auslenkhebel in dieser Ausführungsform ein Spurstangenverbindungsgelenk zum Verbinden des Auslenkhebels mit der zweiten Spurstange auf. Um ein Verstellen des Grades der dynamischen Sturzverstellung zu ermöglichen, kann das Spurstangenverbindungsgelenk in Längsrichtung des Auslenkhebels verschiebbar sein.

Zum Verhindern eines unkontrollierten Schwenkens des Auslenkhebels um das Aufnahmegelenk, insbesondere wenn das Aufnahmegelenk als Kugelgelenk ausgebildet ist, ist der Auslenkhebel über eine Gelenkverbindung mit der Radaufnahmevorrichtung gelenkig verbunden. Insbesondere kann die Gelenkverbindung mehrere, beispielsweise zwei Einzelgelenke aufweisen. Somit können die erforderlichen Freiheitsgrade geschaffen werden, um ein voneinander unabhängiges Bewegen der beiden Spurstangen zu ermöglichen. Vorzugsweise sind die beiden Spurstangen an einem gemeinsamen Punkt mit einer Lenkvorrichtung verbunden.

Eine unabhängige Erfindung betrifft eine Radaufhängung in Verbindung mit einem McPherson-Federbein. Hierbei ist das obere Verbindungsgelenk in einem Verbindungslager des Fahrzeugschassis, insbesondere in einem Domlager gelagert. Im Gegensatz zu der Ausführungsform mit einer Doppelquerlenkerachse ist somit das obere Verbindungsgelenk relativ zum Fahrzeugschassis fixiert. Das untere Verbindungsgelenk ist mit einem Querlenker oder einem anders ausgebildeten Lenker verbunden, wobei zwischen dem unteren Verbindungsgelenk und dem oberen Verbindungsgelenk eine Radaufnahmeachse verläuft, die ein Stoßdämpferelement aufweist. Das Stoßdämpferelement kann sich dabei oberhalb oder unterhalb der Radaufnahmevorrichtung befinden, wobei zusätzlich ein Federelement vorgesehen sein kann. Da durch das verwendete Federbein das obere und das untere Verbindungsgelenk keinen konstanten Abstand zueinander Aufweisen, ist es bevorzugt, keine Versteifungsvorrichtung vorzusehen, die den Auslenkhebel mit der Radaufnahmevorrichtung verbindet. Dadurch, dass das obere Verbindungsgelenk fest mit dem Fahrzeugschassis verbunden ist, wird dennoch ein Schwenken des Auslenkhebels um das Aufnahmegelenk vermieden. Die Radaufhängung in Verbindung mit dem McPherson-Federbein kann weitere Merkmale der bisher genannten Ausführungsformen mit einer oder zwei Spurstangen aufweisen. Vorzugsweise werden zwei Spurstangen verwendet.

Im Folgenden werden bevorzugte Ausführungsformen der Erfindungen anhand von Figuren näher erläutert.

Es zeigen:
- Fig. 1: eine schematische Ansicht der erfindungsgemäßen Radaufhängung mit einer Spurstange von schräg oben,
- Fig. 2: eine schematische Ansicht der erfindungsgemäßen Radaufhängung mit zwei Spurstangen von schräg oben,
- Fig. 3: eine schematische Ansicht einer Radaufhängung in Verbindung mit einem McPherson-Federbein,

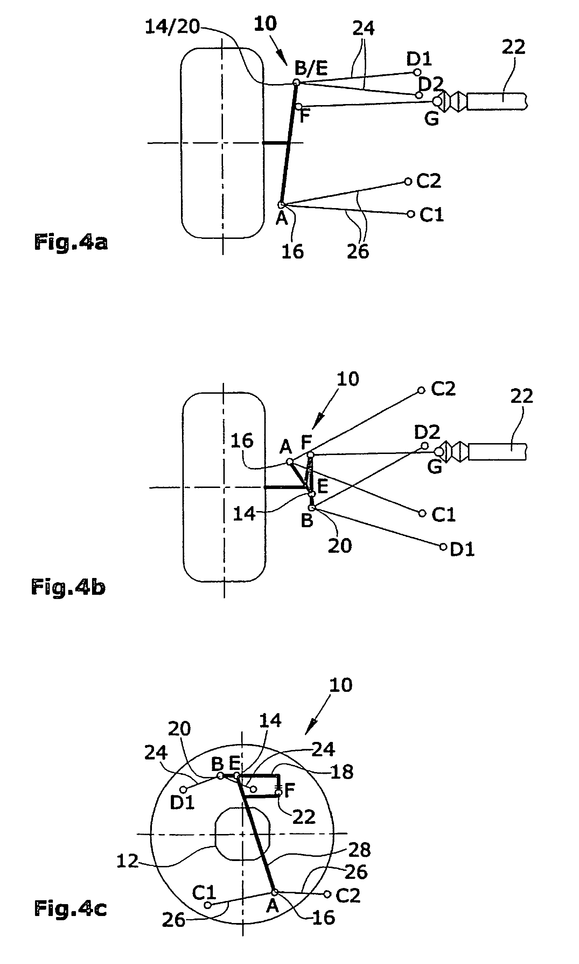

- Fig. 4a: eine schematische Frontansicht der erfindungsgemäßen Radaufhängung mit einer Spurstange,
- Fig. 4b: eine schematische Draufsicht der erfindungsgemäßen Radaufhängung mit einer Spurstange,
- Fig. 4c: eine schematische Seitenansicht der erfindungsgemäßen Radaufhängung mit einer Spurstange,

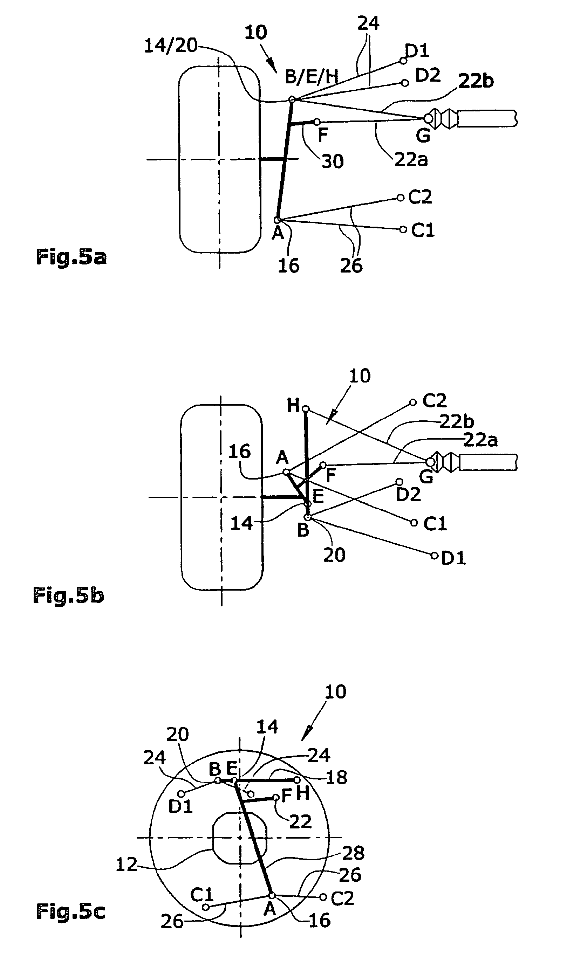

- Fig. 5a: eine schematische Frontansicht der erfindungsgemäßen Radaufhängung mit zwei Spurstangen,
- Fig. 5b: eine schematische Draufsicht der erfindungsgemäßen Radaufhängung mit zwei Spurstangen und
- Fig. 5c: eine schematische Seitenansicht der erfindungsgemäßen Radaufhängung mit zwei Spurstangen.

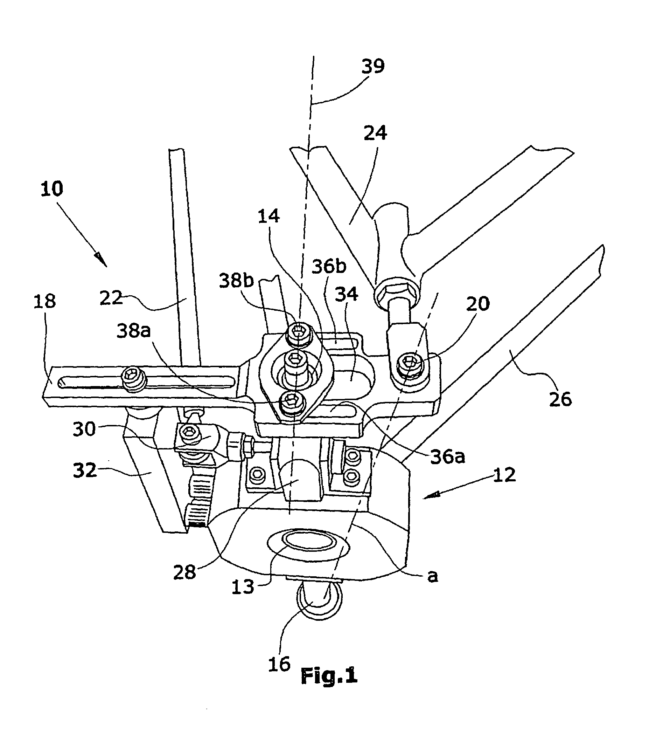

Gemäß Fig. 1 weist eine Radaufhängung 10 zur dynamischen Sturzverstellung eines lenkbaren Rades an der Vorderachse eines nicht dargestellten Fahrzeugs eine Radaufnahmevorrichtung 12 zum drehbaren Halten eines lenkbaren Rades auf. Im dargestellten Ausführungsbeispiel weist die Radaufnahmevorrichtung 12 ein Radlager 13 auf. Alternativ kann auch ein Achsschenkel zur Aufnahme des Rades vorgesehen sein. Es ist ein oberes 20 sowie ein unteres Verbindungsgelenk 16 zum Verbinden der Radaufnahmevorrichtung 12 mit einem nicht dargestellten Fahrzeugschassis vorgesehen. Durch diese beiden Punkte verläuft die virtuelle Schwenkachse a, um die die gesamte Radaufnahmevorrichtung 12 bei einem Verschieben der Spurstange 22 schwenkbar ist. Hierdurch erfolgt eine dynamische mechanische Sturzverstellung.

Das obere Verbindungsgelenk 20 ist mit einem Auslenkhebel 18 verbunden, der wiederum mit einem Aufnahmegelenk 14 verbunden ist. Dieses Aufnahmegelenk 14 ist mit einem oberen Ende der Radaufnahmeachse 28 verbunden. Das untere Ende der Radaufnahmeachse 28 ist mit dem unteren Verbindungsgelenk 16 verbunden. Die Radaufnahmeachse 28 und die Radaufnahmevorrichtung 12 können als eine Einheit ausgebildet sein.

Durch ein Verschieben des Aufnahmegelenks 14 entlang der Längsachse des Auslenkhebels 18 kann der Grad der dynamischen Sturzverstellung eingestellt werden. Hierzu weist der Auslenkhebel 18 ein erstes Langloch 34 auf, in dem das Aufnahmegelenk 14 in Längsrichtung des Auslenkhebels 18 verschiebbar ist. Weiterhin sind zwei zweite Langlöcher 36a, 36b vorgesehen, in denen zwei Feststellschrauben 38a, 38b ebenfalls in Längsrichtung des Auslenkhebels 18 verschiebbar sind. Wird das Aufnahmegelenk 14 gemäß Fig. 1 nach rechts verschoben, erfolgt eine geringere Sturzverstellung beim Lenken, während eine Verschiebung des Aufnahmegelenks 14 nach links einer größeren Sturzverstellung entspricht. Zum Verstellen des Aufnahmegelenks 14 in Längsrichtung des Auslenkhebels kann insbesondere eine hydraulische, pneumatische oder elektromechanische Betätigungseinheit vorgesehen sein, so dass eine flexible Anpassung des Fahrwerks an unterschiedliche Situationen möglich ist.

Die Spurstange 22 ist über einen Spurstangenhebel 30 mit der Radaufnahmevorrichtung 12 verbunden, so dass eine Übertragung der Lenkkräfte erfolgen kann. Der Spurstangenhebel 30 kann alternativ am Auslenkhebel 18 befestigt sein.

Um zu verhindern, dass der Auslenkhebel 18 um das Aufnahmegelenk 14 herumschwenkt, ist der Auslenkhebel 18 über eine Versteifungsvorrichtung 32 mit der Radaufnahmevorrichtung 12 fest verbunden. Dies ist insbesondere notwendig, wenn das Aufnahmegelenk 14 als Kugelgelenk ausgebildet ist. Alternativ dazu ist es möglich, das Aufnahmegelenk 14 nicht als Kugelgelenk auszubilden, so dass das Aufnahmegelenk 14 lediglich ein Schwenken der Radaufnahmeachse 28 um ihre eigene Achse erlaubt, nicht jedoch ein Verschwenken des Auslenkhebels 18 um eine Achse 39, die senkrecht zur Längsrichtung des Auslenkhebels 18 verläuft.

Die Verbindung der Radaufhängung 10 mit dem nicht dargestellten Fahrzeugschassis erfolgt über die beiden Querlenker 24, 26.

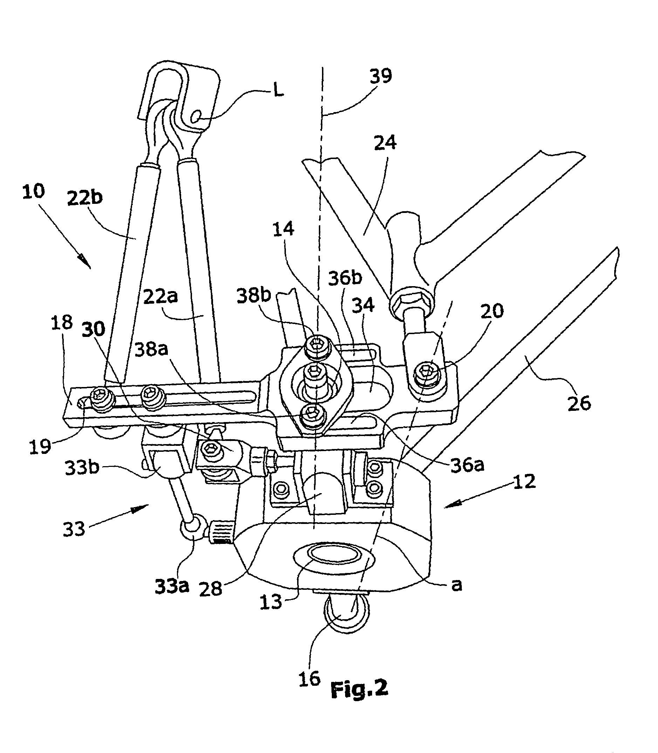

Gemäß Fig. 2 ist zusätzlich zu der ersten Spurstange 22a eine zweite Spurstange 22b vorgesehen. Die erste Spurstange 22a ist dabei mit dem Spurstangenhebel 30 verbunden, während die zweite Spurstange 22b über ein Spurstangenverbindungsgelenk 19 mit dem Auslenkhebel 18 verbunden ist. Die beiden Spurstangen 22a, 22b sind an einem gemeinsamen Punk L mit einer Lenkvorrichtung verbunden. Durch Verschieben des Spurstangenverbindungsgelenks 19 entlang des Auslenkhebels 18 ist ein Einstellen des Grades der dynamischen Sturzverstellung möglich. Weiterhin kann durch Verändern der Länge des Spurstangenhebels 30 definiert werden, wie weit ein Verschwenken der Radaufnahmevorrichtung um die Radaufnahmeachse 28 bei einem Verschieben der ersten Spurstange 22a erfolgt.

Da das Aufnahmegelenk 14 bei der Ausführungsform mit zwei Spurstangen vorzugsweise als Kugelgelenk ausgebildet ist, muss ein unkontrolliertes Schwenken des Auslenkhebels 18 um das Aufnahmegelenk 14 herum unterbunden werden. Dies erfolgt über eine Gelenkverbindung 33, über die der Auslenkhebel 18 gelenkig mit der Radaufnahmevorrichtung 12 verbunden ist. Insbesondere weist die Gelenkverbindung 33 mehrere Einzelgelenke 33a, 33b auf, wobei das Einzelgelenk 33b auch starr sein kann.

DieFiguren 4a - c bzw. 5a - c zeigen entsprechende schematische Ansichten der erfindungsgemäßen Radaufhängung mit einer bzw. mit zwei Spurstangen.

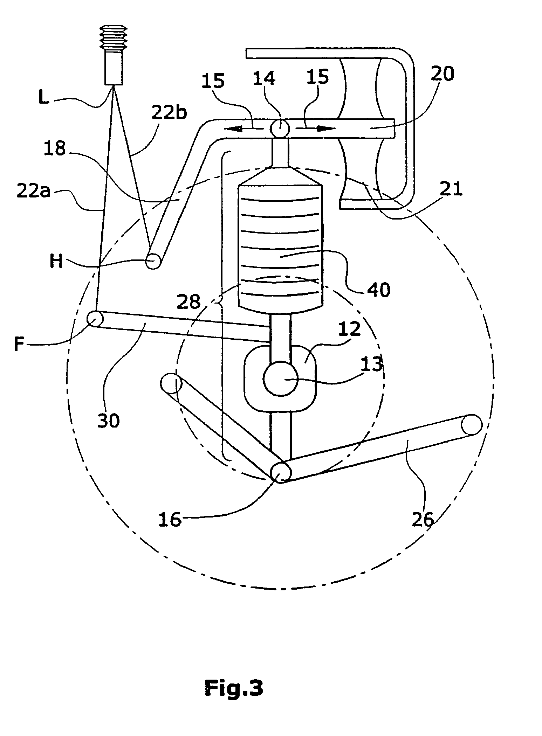

In Fig. 3 ist eine Radaufhängung 10 in Verbindung mit einem McPherson-Federbein dargestellt. Das obere Verbindungsgelenk 20 ist hierbei im Domlager 21 gelagert, das fest mit einer nicht dargestellten Fahrzeugkarosserie verbunden ist. Mit dem oberen Verbindungsgelenk 20 ist der Auslenkhebel 18 verbunden. Mit diesem Auslenkhebel 18 ist das Aufnahmegelenk 14 verbunden, das vorzugsweise als Kugelgelenk ausgebildet ist. Das Aufnahmegelenk 14 ist mit dem oberen Ende der Radaufnahmeachse 28 verbunden. Diese Radaufnahmeachse umfasst einen Stoßdämpfer 40, eine Radaufnahmevorrichtung 12, die wiederum ein Radlager 13 aufweist, in dem ein nicht dargestelltes Rad gelagert ist. Das untere Ende der Radaufnahmeachse 28 ist in dem Querlenker 26 gelagert. Somit ist ein McPherson-Federbein ausgebildet, mit dem Unterschied, dass erfindungsgemäß das obere Ende des McPherson-Federbeins nicht im Domlager gelagert ist, sondern in einem Punkt, der mit Hilfe des Auslenkhebels 18 gegenüber dem Domlager 21 versetzt angeordnet ist. Hierdurch kann eine dynamische Sturzverstellung erfolgen. Zur Einstellung des Grades der dynamischen Sturzverstellung kann das Aufnahmegelenk 14 gemäß den Merkmalen der bisher beschriebenen ersten Erfindung in Längsrichtung des Auslenkhebels 18, d. h. entlang der Pfeile 15 verschoben werden.

Besonders bevorzugt weist die Radaufhängung 10 in Verbindung mit einem McPherson-Federbein zwei Spurstangen 22a, 22b auf, wobei die erste Spurstange 22a mit einem Spurstangenhebel 30 und die zweite Spurstange 22b mit dem Auslenkhebel 18 verbunden ist. Die beiden Spurstangen 22a, 22b sind ebenfalls an einem gemeinsamen Punkt L mit einer Lenkvorrichtung verbunden.

Die Ausfuhrungsform mit dem McPherson-Federbein kann weiterhin andere bisher genannte Merkmale der Radaufhängung mit einer oder mit zwei Spurstangen aufweisen.

Insbesondere sind bei dieser Ausführungsform die Punkte f und h nicht durch ein Versteifungselement miteinander verbunden, da durch das Vorsehen des Stoßdämpfers 40 der Abstand zwischen den beiden Punkten f und h nicht konstant ist.

## Patentansprüche

1. Radaufhängung zur einstellbaren dynamischen Sturzverstellung eines lenkbaren Rades, insbesondere an der Vorderachse eines Fahrzeugs, mit einer Radaufnahmevorrichtung (12) zum drehbaren Halten eines lenkbaren Rades,
einem oberen (20) und einem unteren (16) Verbindungsgelenk zum Verbinden der Radaufnahmevorrichtung (12) mit einem Fahrzeugchassis,
einem Spurstangenhebel (30) zum Verbinden der Radaufnahmevorrichtung (12) mit einer Spurstange (22) zum Übertragen von Lenkkräften,
mit einem mit genau einem (20) der beiden Verbindungsgelenke (16, 20) gelenkig verbundenen Auslenkhebel (18),
wobei das andere Verbindungsgelenk (16) mit einem ersten Ende der Radaufnahmevorrichtung (12) verbunden ist, und
wobei der Auslenkhebel (18) mit einem Aufnahmegelenk (14) verbunden ist, das mit einem zweiten Ende der Radaufnahmevorrichtung (12) verbunden ist
**dadurch gekennzeichnet, dass**
durch das obere (20) und das untere Verbindungsgelenk (16) eine tatsächliche oder virtuelle Schwenkachse (a) verläuft um die die gesamte Radaufnahmevorrichtung (12) durch ein Verschieben der Spurstange (22) schwenkbar ist, sodass hierdurch eine dynamische mechanische Sturzverstellung erfolgt.

2. Radaufhängung nach Anspruch 1, **dadurch gekennzeichnet, dass** das Aufnahmegelenk (14) zur Einstellung des Grades der dynamischen Sturzverstellung in Längsrichtung des Auslenkhebels (18) verschiebbar ist.

3. Radaufhängung nach einem der Ansprüche 1 - 2, **dadurch gekennzeichnet, dass** die Radaufnahmevorrichtung (12) relativ zu der Schwenkachse (a) versetzt angeordnet ist.

4. Radaufhängung nach einem der Ansprüche 1 - 3, **dadurch gekennzeichnet, dass** die Schwenkachse (a) in einem Winkel (α) zu einer Fahrbahn verläuft, der nicht 90° beträgt, wobei (α) der Winkel zwischen der Fahrbahn und der Schwenkachse (a) in Längsrichtung des Fahrzeugs ist.

5. Radaufhängung nach einem der Ansprüche 1 - 4, **dadurch gekennzeichnet, dass** das obere (20) und das untere Verbindungsgelenk (16) jeweils mit einer Verbindungsvorrichtung, insbesondere mit einem oberen (24) und einem unteren Querlenker (26) zum Verbinden der Radaufhängung (10) mit einem Fahrzeugchassis verbindbar sind.

6. Radaufhängung nach einem der Ansprüche 1 - 5, **dadurch gekennzeichnet, dass** zwischen dem Verbindungsgelenk (16), das mit dem ersten Ende der Radaufnahmevorrichtung (12) verbunden ist und dem Aufnahmegelenk (14) eine Radaufnahmeachse (28) verläuft, die mit der Radaufnahmevorrichtung (12) verbunden ist.

7. Radaufhängung nach einem der Ansprüche 1 - 6, **dadurch gekennzeichnet, dass** das Aufnahmegelenk (14) sowie das obere (20) und das untere Verbindungsgelenk (16) als Kugelgelenk ausgebildet sind.

8. Radaufhängung nach einem der Ansprüche 1 - 7, **gekennzeichnet durch** eine Versteifungsvorrichtung (32), die mit dem Auslenkhebel (18) zum Verhindern eines Schwenkens des Auslenkhebels (18) um das Aufnahmegelenk (14) verbunden ist.

9. Radaufhängung nach einem der Ansprüche 1 - 8, **dadurch gekennzeichnet, dass** der Auslenkhebel (18) und der Spurstangenhebel (30) als ein Bauteil ausgebildet sind.

10. Radaufhängung nach einem der Ansprüche 1 - 9, **dadurch gekennzeichnet, dass** der Auslenkhebel (18) und der Spurstangenhebel (30) als zwei separate Bauteile ausgebildet sind.

11. Radaufhängung nach Anspruch 10, **dadurch gekennzeichnet, dass** der Spurstangenhebel (30) mit einer ersten Spurstange (22a) und der Auslenkhebel (18) mit einer zweiten Spurstange (22b) verbindbar sind.

12. Radaufhängung nach ein Anspruch 11, **dadurch gekennzeichnet, dass** der Auslenkhebel (18) ein Spurstangenverbindungsgelenk (19) zum Verbinden des Auslenkhebels (18) mit der zweiten Spurstange (22b) aufweist.

13. Radaufhängung nach Anspruch 12, **dadurch gekennzeichnet, dass** das Spurstangenverbindungsgelenk (19) in Längsrichtung des Auslenkhebels (18) zum Verstellen des Grades der dynamischen Sturzverstellung verschiebbar ist.

14. Radaufhängung nach einem der Ansprüche 10 - 13, **dadurch gekennzeichnet, dass** die Radaufnahmevorrichtung (12) mit dem Auslenkhebel (18) über eine Gelenkverbindung (33) gelenkig verbunden ist, wobei die Gelenkverbindung (33) insbesondere mehrere Einzelgelenke (33a, 33b) aufweist.

15. Radaufhängung nach einem der Ansprüche 1 - 7 sowie 10 - 13, **dadurch gekennzeichnet, dass** das obere Verbindungsgelenk (20) in einem Verbindungslager des Fahrzeugchassis, insbesondere in einem Domlager gelagert ist.

16. Radaufhängung gemäß den Ansprüchen 6 und 15, **dadurch gekennzeichnet, dass** mit der Radaufnahmeachse (28) ein Stoßdämpferelement (40) verbunden ist.

## Claims

1. A wheel suspension for an adjustable dynamic camber adjustment of a steerable wheel, in particular on the front axle of a vehicle, comprising a wheel receiving device (12) for rotatably retaining a steerable wheel,
an upper (20) and a lower (16) connecting joint for connecting the wheel receiving device (12) with a car body,
a track arm (30) for connecting said wheel receiving device (12) with a track bar (22) for the transmission of steering forces,
a deflection arm (18) articulated to exactly one (20) of the two connecting joints (16, 20),
wherein the other connecting joint (16) is connected with a first end of the wheel receiving device (12), and
wherein the deflection lever (18) is connected with a receiving joint (14) which is connected with a second end of the wheel receiving device (12),
**characterized in that**
a real or a virtual pivot axis (a) extends through the upper (20) and the lower connecting joint (16), about which the entire wheel receiving device (12) is pivotable by displacement of the track bar (22) so that a dynamic mechanical camber adjustment is effected thereby.

2. The wheel suspension of claim 1, **characterized in that** the receiving joint (14) is displaceable in the longitudinal direction of the deflection lever (18) for an adjustment of the degree of dynamic camber adjustment.

3. The wheel suspension of one of claims 1-2, **characterized in that** the wheel receiving device (12) is arranged offset with respect to the pivot axis (a).

4. The wheel suspension of one of claims 1-3, **characterized in that** the pivot axis (a) extends under an angle (α) to a road surface that is different from 90°, wherein (α) is the angle between the road surface and the pivot axis (a) seen in the longitudinal direction of the vehicle.

5. The wheel suspension of one of claims 1-4, **characterized in that** the upper (20) and the lower connecting joint (16) are each connectable with a connecting device, in particular with an upper (24) and a lower transverse link (26), for connecting the wheel suspension (10) with a vehicle body.

6. The wheel suspension of one of claims 1-5, **characterized in that** a wheel receiving axle (28) extends between the connecting joint (16) connected with the first end of the wheel receiving device (12) and the receiving joint (14), said axle being connected with the wheel receiving device (12).

7. The wheel suspension of one of claims 1-6, **characterized in that** the receiving joint (14), as well as the upper (20) and the lower connecting joint (16) are configured as ball joints.

8. The wheel suspension of one of claims 1-7, **characterized by** a bracing device (32) connected with said deflection lever (18) in order to prevent the deflection lever (18) from pivoting about the receiving joint (14).

9. The wheel suspension of one of claims 1-8, **characterized in that** the deflection lever (18) and the track arm (30) are formed as a single component.

10. The wheel suspension of one of claims 1-9, **characterized in that** the deflection lever (18) and the track arm (30) are provided as two separate components.

11. The wheel suspension of claim 10, **characterized in that** the track arm (30) may be connected with a first track bar (22a) and the deviation lever (18) may be connected with a second track bar (22b).

12. The wheel suspension of claim 11, **characterized in that** the deflection lever (18) comprises a track bar connecting joint (19) for connecting the deflection lever (18) with the second track bar (22b).

13. The wheel suspension of claim 12, **characterized in that** the track bar connecting joint (19) is displaceable in the longitudinal direction of the deflection lever (18) in order to adjust the degree of dynamic camber adjustment.

14. The wheel suspension of one of claims 10-13, **characterized in that** the wheel receiving device (12) is articulately connected with the deflection lever (18) by means of a hinge joint (33), said hinge joint (33) in particular comprising a plurality of individual joints (33a, 33b).

15. The wheel suspension of one of claims 1-7 and 10-13, **characterized in that** the upper connecting joint (20) is supported in a connecting bearing of the vehicle body, in particular in a strut mount.

16. The wheel suspension of claims 6 and 15, **characterized in that** a shock absorber element (40) is connected with the wheel receiving axle (28).

## Revendications

1. Suspension de roues permettant l'ajustage de carrossage dynamique réglable d'une roue directrice, notamment sur l'axe avant d'un véhicule, comprenant
un dispositif récepteur de roue (12) destiné à tenir de manière rotative une roue directrice,
un joint de connexion supérieur (20) et un joint de connexion inférieur (16) pour connecter ledit dispositif récepteur de roue (12) à un châssis de voiture,
un bras de direction (30) destiné à connecter ledit dispositif récepteur de roue (12) à une barre de connexion (22) pour la transmission de forces de direction,
un levier de déviation (18) connecté de manière articulée à exactement un (20) des deux joint de connexion (16, 20),
l'autre joint de connexion (16) étant connecté avec une première extrémité du dispositif récepteur de roue (12), et
ledit levier de déviation (18) étant connecté à un joint de réception (14) qui est connecté à une deuxième extrémité dudit dispositif récepteur de roue (12),
**caractérisée en ce qu'**
un axe de pivotement (a) réel ou virtuel s'étend à travers ledit joint de connexion supérieur (20) et le joint de connexion inférieur (16), l'ensemble dudit dispositif récepteur de roue (12) étant pivotable autour de cet axe par le déplacement de ladite barre de connexion (22), de sorte que, par cela, un ajustage de carrossage mécanique dynamique est effectué.

2. Suspension de roue selon la revendication 1, **caractérisée en ce que** ledit joint de réception (14) est déplaçable pour ajuster le dégrée de l'ajustage de carrossage dans la direction longitudinale dudit levier de déviation (18).

3. Suspension de roue selon l'une quelconque des revendications 1 - 2, **caractérisée en ce que** le dispositif récepteur de roue (12) est disposé décalé par rapport à ledit axe de pivotement (a).

4. Suspension de roue selon l'une quelconque des revendications 1 - 3, **caractérisée en ce que** ledit axe de pivotement (a) s'étend sous un angle (α) par rapport de la voie qui est différent de 90°, (α) étant l'angle entre la voie et ledit axe de pivotement (a) vu dans la direction longitudinale du véhicule.

5. Suspension de roue selon l'une quelconque des revendications 1 - 4, **caractérisée en ce que** ledit joint de connexion supérieur (20) et le joint de connexion inférieur (16) sont aptes, respectivement, à être connectés à un dispositif de connexion, notamment une barre transversale supérieure (24) et une barre transversale inférieure (26), pour la connexion de la suspension de roue (10) à un châssis de voiture.

6. Suspension de roue selon l'une quelconque des revendications 1 - 5, **caractérisée en ce qu'**un axe récepteur de roue (28) s'étend entre ledit joint de connexion (16) connecté à la première extrémité du dispositif récepteur de roue (12) et le joint de réception (14), ledit axe étant connecté au dispositif récepteur de roue (12).

7. Suspension de roue selon l'une quelconque des revendications 1 - 6, **caractérisée en ce que** ledit joint de réception (14), ledit joint de connexion supérieur (20) et ledit joint de connexion inférieur (16) sont réalisés comme joints sphériques.

8. Suspension de roue selon l'une quelconque des revendications 1 - 7, **caractérisée par** un dispositif de renforcement (32) connecté audit levier de déviation (18) pour empêcher le pivotement dudit levier de déviation (18) autour du joint de réception (14).

9. Suspension de roue selon l'une quelconque des revendications 1 - 8, **caractérisée en ce que** ledit levier de déviation (18) et ledit bras de direction (30) sont formés comme élément unitaire.

10. Suspension de roue selon l'une quelconque des revendications 1 - 9, **caractérisée en ce que** ledit levier de déviation (18) et ledit bras de direction (30) sont formés comme deux éléments séparés.

11. Suspension de roue selon la revendication 10, **caractérisée en ce que** ledit bras de direction (30) est apte à être connecté à une première barre de connexion (22a) et ledit levier de déviation (18) est apte à être connecté à une deuxième barre de connexion (22b).

12. Suspension de roue selon la revendication 11, **caractérisée en ce que** ledit levier de déviation (18) comprend un joint de connexion (19) à la barre de connexion pour connecter ledit levier de déviation (18) à la deuxième barre de connexion (22b).

13. Suspension de roue selon la revendication 12, **caractérisée en ce que** ledit joint de connexion (19) à la barre de connexion est déplaçable dans la direction longitudinale dudit levier de déviation (18) pour ajuster le dégrée de l'ajustage de carrossage dynamique.

14. Suspension de roue selon l'une quelconque des revendications 10 - 13, **caractérisée en ce que** le dispositif récepteur de roue (12) est connecté de manière articulée audit levier de déviation (18) par l'intermédiaire d'une articulation (33), ladite articulation (33) notamment comprenant plusieurs joints individuels (33a, 33b).

15. Suspension de roue selon l'une quelconque des revendications 1 - 7 et 10 - 13, **caractérisée en ce que** ledit joint de connexion supérieur (20) est supporté dans un support de connexion du châssis de la voiture, notamment dans un support de jambe.

16. Suspension de roue selon l'une quelconque des revendications 6 et 15, **caractérisée en ce qu'**un élément amortisseur (40) est connecté à l'axe de réception de roue (28).
